Europäisches Patentamt

European Patent Office

Office européen des brevets

(11) Veröffentlichungsnummer: **0 166 678**
**A1**

(12) **EUROPÄISCHE PATENTANMELDUNG**

(21) Anmeldenummer: **85730073.5**

(22) Anmeldetag: **28.05.85**

(51) Int. Cl.⁴: **G 01 F 1/68**

(30) Priorität: **19.06.84 DE 3422690**

(43) Veröffentlichungstag der Anmeldung: **02.01.86**
**Patentblatt 86/1**

(84) Benannte Vertragsstaaten: **AT BE CH DE FR GB IT LI LU NL SE**

(71) Anmelder: **Merkel, Wolfgang, Dipl.-Ing., Bartningallee 7, D-1000 Berlin 21 (DE)**

(72) Erfinder: **Merkel, Wolfgang, Dipl.-Ing., Bartningallee 7, D-1000 Berlin 21 (DE)**

(74) Vertreter: **Butenschön, Antje, Dr. et al, Patentanwälte PFENNING, MEINIG & PARTNER Kurfürstendamm 170, D-1000 Berlin 15 (DE)**

(54) **Thermischer Durchflussmesser.**

(57) Es wird ein thermischer Durchflussmesser (1) vorge-schlagen, bei dem ein Fluid durch einen Messkanal (3) strömt, in dessen Strömungsbereich zwei temperaturabhän-gige Messwiderstände in Strömungsrichtung hintereinander angeordnet sind, die Bestandteil einer Brückenschaltung sind. Der Messkanal (3) ist als Vertiefung in einem Block (2) ausgebildet, in die ein Einlass- und Auslasskanal (4, 5) mün-det. Der Messkanal (3) weist relativ zu seiner Tiefe eine gros-se Ausdehnung in Länge und Breite auf. Die Vertiefung ist mit einem die Messwiderstände als Flächenmuster tragen-den Substrat (16) abgedeckt, wobei die Messwiderstände in etwa die gesamte Vertiefung (3) überdecken.

## Thermischer Durchflußmesser

Die Erfindung betrifft einen thermischen Durchflußmesser nach dem Oberbegriff des Hauptanspruchs.

Aus der DE-PS 23 50 848 ist ein thermischer Durchflußmesser bekannt, bei dem auf der Außenseite eines rohrförmigen Meßkanals zwei in Reihe geschaltete Spulen aufgewickelt sind, die mit zwei weiteren Widerständen Bestandteil einer Brückenschaltung sind. Die Brückenschaltung wird von einer Spannungs- oder Stromquelle versorgt, wodurch sich die Spulen erwärmen. Bei Vorhandensein einer Strömung im Meßkanal entsteht eine Temperaturdifferenz zwischen den Meßwiderständen und somit eine Widerstandsänderung, die von einem Meßinstrument erfaßt werden kann und ein Maß für den Massenstrom durch den Meßkanal gibt. Um Meßverfälschungen aufgrund von Konvektion zu verhindern, sind die beiden Spulen von einem offenzelligen Schaumstoff umhüllt.

Der Erfindung liegt die Aufgabe zugrunde, einen thermischen Durchflußmesser zu schaffen, der einfach im Aufbau und somit kostengünstig zu fertigen ist, der eine lageunabhängige Messung bei geringen Druckverlusten erlaubt und der unempfindlich gegen mechanische Beanspruchung ist.

Diese Aufgabe wird erfindungsgemäß durch die kennzeichnenden Merkmale des Hauptanspruchs in Verbindung mit den Merkmalen des Oberbegriffs gelöst.

Durch Vorsehen eines Meßkanals, der als flache, mit Einlaß- und Auslaßöffnungen versehene Vertiefung in einem Block ausgebildet ist, die einen relativ großen Strömungsquerschnitt aufweist und die von einem die Widerstände als Flächenmuster tragendes Substrat abgedeckt ist, treten geringe Druckverluste auf und Turbulenzen der Strömungen haben keinen Einfluß, da die Meßwiderstände nahezu die gesamte Vertiefung überdecken. Der Aufbau des Durchflußmessers ist sowohl durch den den Meßkanal aufweisenden Block als auch durch die Flächenmeßwiderstände kompakt und gegen mechanische Beanspruchungen weitgehend unempfindlich. Die Messung mit dem Durchflußmesser ist weitgehend lageunabhängig, da nur eine geringe Strahlungsbeeinflussung möglich ist.

Durch die in den Unteransprüchen angegebenen Maßnahmen sind vorteilhafte Weiterbildungen und Verbesserungen möglich. Durch den im Block angeordneten Bypass ist eine Meßbereichserweiterung möglich. Der Strömungsverteiler mit der Umlenkblende am Strömungseingang des Durchflußmessers erlaubt eine Strömungsaufteilung in dem Bypass und dem Meßkanal, wobei sich an der Umlenkblende Feststoffpartikel ablagern können, so daß die Kanäle weitgehend gegen Verschmutzung geschützt sind.

Durch Vorsehen von mindestens einer Distanzplatte mit einer der Vertiefung entsprechenden Öffnung zwischen Vertiefung und Widerstände kann eine Anpassung des Durchflußmessers durch Vergrößern des Strömungsquerschnittes an einen gewünschten Meßbereich vorgenommen werden.

Dadurch, daß das die Meßwiderstände tragende Substrat mit einer Deckplatte, die eine Aushöhlung entsprechend der Vertiefung im Block aufweist, abgedeckt wird, können die Meßwiderstände thermisch isoliert werden, so daß sie gegen äußere Wärmebeeinflussungen unempfindlich werden.

Durch Vorsehen einer auf der den Meßwiderständen gegenüberliegenden Seite des Substrats angeordneten Kupferfolie werden bei Abklingen der Strömung die Meßwiderstände schneller ins thermische Gleichgewicht gebracht, so daß sich die Zeitkonstanten des Meßsystems verringern, wobei allerdings hier eine Optimierung vorgenommen werden muß, da sich die Meßempfindlichkeit etwas verringert.

0166678

Dadurch, daß das Substrat eine oder mehrere
Bohrungen aufweist, die den Meßkanal mit der
Aushöhlung der Deckplatte verbinden, wird
das Substrat mit den Meßwiderständen beidseitig dem gleichen statischen Druck ausgesetzt,
so daß es keiner mechanischen Beanspruchung
durch Druck unterliegt. Entsprechend können
Strömungskanäle zu und von der Aushöhlung
vorgesehen sein, so daß das Substrat beidseitig
umströmt wird und keiner Druckbeanspruchung
unterliegt.

Die Erfindung ist in der Zeichnung dargestellt
und wird in der nachfolgenden Beschreibung
näher erläutert. Es zeigen·

Fig. 1    einen Längsschnitt durch den
          thermischen Durchflußmesser,

Fig. 2    einen Schnitt entsprechend der
          Schnittlinie II-II nach Fig. 1,

Fig. 3    einen Schnitt längs der Schnittlinie III-III nach Fig. 1,

Fig. 4    eine Aufsicht auf das Substrat
          mit Meßwiderständen, wobei die
          elektrische Beschaltung
          schematisch dargestellt ist,

Fig. 5    einen Schnitt durch den Durchflußmesser mit Deckplatte,und

Fig. 6    eine Aufsicht auf die den Meßwiderständen gegenüberliegende
          Seite des Substrats mit Metallfolie
          zum Wärmeaustausch.

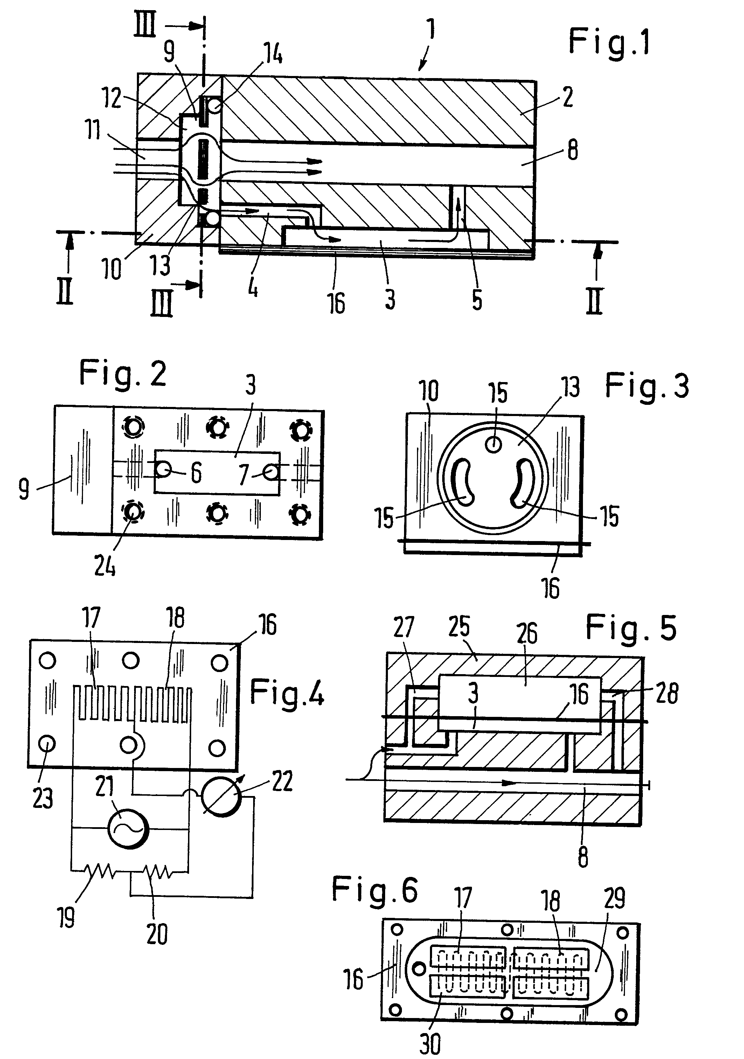

Der in Fig. 1 dargestellte Durchflußmesser 1 weist einen quaderförmigen Block 2 aus Kunststoff auf, in dem die verschiedenen Strömungskanäle angeordnet sind. Der Meßkanal 3 ist als Vertiefung in der Oberfläche des Blocks angeordnet, wobei er jeweils mit einem Einlaßkanal 4 und einem Auslaßkanal 5 verbunden ist. Die Einlaß- und Auslaßkanäle 4, 5 sind ebenfalls in dem Block 2 vorgesehen und weisen Umlenkungen auf. Wie aus Fig. 2 zu erkennen, ist der Meßkanal 3 relativ zu seiner Tiefe sehr viel breiter und noch viel länger, so daß der Strömungsquerschnitt trotz der relativ geringen Tiefe groß ist. Am Eingang und Ausgang des Meßkanals 3 sind eine Einlaßöffnung 6 und eine Auslaßöffnung 7 vorgesehen.

Durch Verändern der Tiefe des Meßkanals 3 kann sein Volumen dem Meßbereich angepaßt werden. In Strömungsrichtung ist der Block 2 mit einem als Bypass 8 dienenden Kanal versehen, der zur Meßbereichserweiterung dient. Der Auslaßkanal 5 aus dem Meßkanal 3 mündet in dem Bypass. An der einen Stirnseite des Blocks 2, in Strömungsrichtung gesehen vor dem Block 2, ist ein Strömungsverteiler 9 angeordnet, der ebenfalls einen mit dem Block 2 befestigten Kunststoffblock 10 aufweist. In dem Kunststoffblock 10 ist ein Strömungskanal 11 angeordnet, der in einer Vertiefung 12 mündet, in der eine Umlenkblende 13 vorgesehen ist. Zur Abdichtung dient ein Dichtring 14. Wie in Fig. 3 gezeigt, weist die Umlenkblende 13 mehrere Öffnungen 15 auf, die nicht mit dem Strömungskanal 11 fluchten. Wie durch die Pfeile 16 in Fig. 1 angedeutet, verteilt die Umlenkblende 13 das ankommende strömende Fluid auf den Bypass 8 und den Einlaßkanal 4 zum Meßkanal 3. Da die Umlenkblende 13 die direkte Strömung hemmt, setzen sich Feststoffpartikel an der Blende ab, so daß die Verschmutzung geringgehalten wird.

Der Meßkanal ist mit einem platten- oder folienförmigen Substrat 16 abgedeckt, auf denen sich die Meßwiderstände, als Flächenwiderstände ausgebildet, befinden, wobei sie beispielsweise auf ein Folienlaminat aufgeätzt, aufgedampft oder aufgesputtert sind. In Fig. 4 sind die Meßwiderstände 17, 18 schematisch auf dem Substrat 16 dargestellt, die zusammen mit den Widerständen 19, 20 eine Brückenschaltung bilden. In dem einen Brückenzweig liegt die Strom- bzw. Spannungsversorgung 21 und in dem anderen ist ein Meßinstrument 22 vorgesehen. Die Bohrungen 23 dienen ebenso wie die Bohrung 24 in dem Block 2 zur Befestigung des Substrates 16 bzw. einer das Substrat fixierenden Deckplatte an dem Block 2.

Eine das Substrat 16 und den Block 2 abdeckende Deckplatte 25 ist in Fig. 5 gezeigt, wobei die Deckplatte 25 eine der Vertiefung des Meßkanals 3 entsprechende Aushöhlung 27 aufweist, die zur thermischen Isolation der auf dem Substrat 16 angeordneten Widerstände 17, 18 gegen eine Wärmebeeinflussung von außen dient. Um einen Druckausgleich zwischen Meßkanal 3 und Aushöhlung 26 zu schaffen, kann das Substrat 16 mit einer oder mehreren, nicht dargestellten Bohrung versehen sein, damit beiderseitig des Substrats 16 der gleiche Druck herrscht.

In einem anderen Ausführungsbeispiel, das in Fig. 5 gezeigt ist, kann auch die Deckplatte mit in der Aushöhlung 26 mündenden Ein- und Auslaßkanälen 27, 28 versehen sein, die jeweils mit dem Einlaßkanal 4 zu dem Meßkanal 3 und mit dem Bypass 8 in Verbindung stehen. Dadurch wird das Substrat 16 beidseitig umströmt, so daß keine Druckdifferenzen auftreten können.

Zur Anpassung des Meßkanals an einen gewünschten Meßbereich können zwischen Block 2 und Substrat bzw. Substrat mit Deckplatte mindestens eine, nicht dargestellte Zwischenplatte mit einer Öffnung entsprechend der Vertiefung des Meßkanals 3 vorgesehen sein, die das Volumen des Meßkanals vergrößert.

Fig. 6 zeigt das Substrat 16 von der den gestrichelt dargestellten Widerständen 17, 18 entgegengesetzten Seite, die eine Anordnung zum Wärmeaustausch zwischen den Widerständen 17, 18 trägt. Diese Anordnung besteht aus einer Metallfolie 29, beispielsweise einer 50 $\mu$m starken Kupferfolie, die ausgeätzte oder ausgestanzte Fenster 30 aufweist. Durch eine derartige Anordnung verringern sich die Zeitkonstanten des Durchflußmessers, da bei einem Abklingen der Strömung die Meßwiderstände 17, 18 über die Kupferfolie 29 schneller ins thermische Gleichgewicht gebracht werden können.

Um die Meßwiderstände 17, 18, die beispielsweise mäanderförmig ausgebildet sind, gegen Korrosion zu schützen, können sie mit einer Folie,

0166678

vorzugsweise 25 µm dick, gas- oder flüssigkeits-dicht abgedeckt werden.

In einem weiteren nicht dargestellten Ausführungsbeispiel ist die Vertiefung für den Meßkanal 3 nicht in dem Block 2 selbst vorgesehen, sondern der Block 2 dient nur als Begrenzung für die Vertiefung, die durch eine Öffnung in einer Zwischenplatte gebildet wird, wobei die Zwischenplatte an dem Block 2 befestigt ist.

Patentansprüche

1. Thermischer Durchflußmesser, bei dem ein Fluid durch einen Meßkanal strömt, in dessen Strömungsbereich zwei temperaturabhängige Meßwiderstände in Strömungsrichtung hintereinander angeordnet sind, die Bestandteil einer Brückenschaltung sind, d a d u r c h g e k e n n z e i c h n e t , daß der Meßkanal (3) als flache und relativ zu ihrer Tiefe in ihrer Länge und Breite ausgedehnte, mit einer Einlaß- und Auslaßöffnung (6,7) durch einen Block (2) mindestens einseitig begrenzte Vertiefung ausgebildet ist, die von einem die Meßwiderstände (17,18) als Flächenmuster tragendes Substrat (16) abgedeckt ist, wobei die Meßwiderstände in etwa die gesamte Vertiefung überdecken.

2. Durchflußmesser nach Anspruch 1, dadurch gekennzeichnet, daß die Ein- und Auslaßöffnung (6,7) jeweils mit einem Ein- und Auslaßkanal (4,5) in Verbindung stehen, die in dem Block (2) umgelenkt sind.

3. Durchflußmesser nach Anspruch 1 oder 2, dadurch gekennzeichnet, daß in dem Block (2) eine in Strömungsrichtung sich erstreckende Bohrung als Bypass (8) angeordnet ist.

4. Durchflußmesser nach Anspruch 3, dadurch gekennzeichnet, daß in Strömungsrichtung vor dem Bypaßeinlaß und dem Einlaßkanal (4) ein Strömungsverteiler (9) mit Umlenkblende (13) vorgesehen ist.

5. Durchflußmesser nach einem der Ansprüche 1 bis 4, dadurch gekennzeichnet, daß das Volumen des Meßkanals (3) durch Zwischenschalten von mindestens einer Distanzplatte mit einer Öffnung entsprechend der Vertiefung im Block (2) zwischen Block (2) und Substrat (16) an einen gewünschten Meßbereich anpaßbar ist.

6. Durchflußmesser nach einem der Ansprüche 1 bis 5, dadurch gekennzeichnet, daß das Substrat (16) von einer Deckplatte (25) abgedeckt ist, die eine in etwa der Flächenausdehnung der Meßwiderstände (17,18) entsprechende Aushöhlung (26) zur thermischen Isolation aufweist.

7. Durchflußmesser nach Anspruch 6, dadurch gekennzeichnet, daß die Deckplatte (25) aus Metall besteht.

8. Durchflußmesser nach einem der Ansprüche 1 bis 7, dadurch gekennzeichnet, daß auf der den Meßwiderständen (17,18) gegenüberliegenden Seite des Substrates (16) eine Anordnung (29) zum Wärmeaustausch zwischen den zwei Meßwiderständen (17,18) vorgesehen ist.

9. Durchflußmesser nach Anspruch 8, dadurch gekennzeichnet, daß die Anordnung zum Wärmeaustausch als Metallfolie (29) vorzugsweise Kupferfolie mit Ausnehmungen (30) ausgebildet ist.

10. Durchflußmesser nach einem der Ansprüche 6 bis 9, dadurch gekennzeichnet, daß zum Druckausgleich zwischen dem Meßkanal (3) und der Aushöhlung (26) in der Deckplatte (25) mindestens eine Öffnung in dem Substrat (16) vorgesehen ist.

11. Durchflußmesser nach einem der Ansprüche 6 bis 9, dadurch gekennzeichnet, daß in der Deckplatte (25) zwei in die Aushöhlung (26) mündende Kanäle (27,28) vorgesehen sind, die jeweils mit dem Ein- und Auslaßkanal (4,5) in Verbindung stehen.

12. Durchflußmesser nach einem der Ansprüche 1 bis 11, dadurch gekennzeichnet, daß die Meßwiderstände zum Schutz gegen Korrosion mit einer gas- und/oder flüssigkeitsdichten Abdeckung versehen sind.

13. Durchflußmesser nach einem der Ansprüche 1 bis 12, dadurch gekennzeichnet, daß das Substrat (16) ein Folienlaminat ist, auf das die Meßwiderstände (17,18) aufgeätzt, aufgedampft oder aufgesputtert sind.

14. Durchflußmesser nach einem der Ansprüche 1 bis 13, dadurch gekennzeichnet, daß der Block (2) aus Kunststoff besteht.

15. Durchflußmesser nach Anspruch 1, dadurch gekennzeichnet, daß die den Meßkanal (3) bildende Vertiefung in dem Block (2) angeordnet ist.

16. Durchflußmesser nach Anspruch 1, dadurch gekennzeichnet, daß die den Meßkanal (3) bildende Vertiefung als Öffnung in einer an dem Block (2) befestigten Platte ausgebildet ist.

1/1  0166678

Fig.1

Fig. 2

Fig. 3

Fig.4

Fig. 5

Fig.6

0166678

Nummer der Anmeldung

**Europäisches Patentamt**

# EUROPÄISCHER RECHERCHENBERICHT

| EINSCHLÄGIGE DOKUMENTE | | | EP 85730073.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| X | GB - A - 839 615 (GODART-MIJN-HARDT) <br> * Fig. 1,2; Seite 2, Zeilen 36-58 * | 1 | G 01 F 1/68 |
| A | | 6,14 | |
| A | US - A - 4 373 387 (NISHIMURA et al.) <br> * Fig. 2,12 * | 1,3 | |
| A | FR - A2 - 2 451 022 (OFFICE) <br> * Fig. 1,2,3A * | 1,2, 11,16 | |
| A | DE - A1 - 2 527 505 (RCA) <br> * Fig. 1,2; Seite 4, 3. Absatz - Seite 6, Zeile 1 * | 1,6,8, 12,15 | RECHERCHIERTE SACHGEBIETE (Int. Cl. 4) |
| A | EP - A2 - 0 019 135 (BOSCH) <br> * Fig. 1,2; Patentansprüche 7,8 * | 12-14 | G 01 F 1/00 <br> G 01 F 5/00 |

Der vorliegende Recherchenbericht wurde für alle Patentansprüche erstellt.

| Recherchenort | Abschlußdatum der Recherche | Prüfer |
|---|---|---|
| WIEN | 14-08-1985 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82